# EUROPÄISCHE PATENTSCHRIFT

(11) **EP 3 322 604 B1**
(45) Veröffentlichungstag und Bekanntmachung des Hinweises auf die Patenterteilung: **08.09.2021**
(21) Anmeldenummer: 16750094.1
(22) Anmeldetag: 12.07.2016
(51) Int. Cl.: B60K 6/40, B60K 6/387

(54) **HYBRIDMODUL FÜR EINEN ANTRIEBSSTRANG UND MONTAGE EINES SOLCHEN HYBRIDMODULS**
HYBRID MODULE FOR A DRIVE TRAIN AND ASSEMBLY OF A HYBRID MODULE OF THIS TYPE
MODULE HYBRIDE POUR UN GROUPE MOTOPROPULSEUR ET MONTAGE D'UN TEL MODULE HYBRIDE

(30) Priorität: 13.07.2015 DE 102015213101
(43) Veröffentlichungstag der Anmeldung: 23.05.2018
(73) Patentinhaber: Schaeffler Technologies AG & Co. KG, 91074 Herzogenaurach (DE)
(72) Erfinder: AGNER, Ivo, 77815 Bühl (DE); KELLER, Aurelie, 67240 Oberhoffen Sur Moder (FR)
(86) Internationale Anmeldenummer: PCT/DE2016/200318
(87) Internationale Veröffentlichungsnummer: WO 2017/008806

(56) Entgegenhaltungen:
- DE-A1-102005 053 887
- DE-A1-102009 059 944
- DE-A1-102010 003 442
- DE-A1-102011 086 741

## Beschreibung

Die vorliegende Erfindung betrifft ein Hybridmodul für einen eine elektrische Maschine, einen Verbrennungsmotor und ein Getriebe aufweisenden Antriebsstrang eines Kraftfahrzeugs gemäß dem Oberbegriff des Anspruchs 1.

Ein entsprechendes Hybridmodul ist aus der WO 2014/026685 A1 bekannt. Diese Druckschrift zeigt ein Hybridmodul für einen Antriebsstrang eines Kraftfahrzeugs, bei dem eine als Innenläufer ausgebildete elektrische Maschine zwischen einem Verbrennungsmotor und einem Getriebe angeordnet ist, wobei das Hybridmodul (i) eine Gesamteinheit mit einem Rotor (Läufer) der elektrischen Maschine, einer innerhalb des Rotors angeordneten Trennkupplung und zumindest einem mit dem Rotor drehfest verbundenen Kupplungsdeckel einer Kupplungseinrichtung und (ii) eine die Gesamteinheit und einen Stator (Ständer) der elektrischen Maschine zumindest teilweise einhausenden Gehäuseteil umfasst.

Aus der DE 10 2005 053 887 A1 ist ein Hybridmodul gemäß dem Oberbegriff des Anspruchs 1 bekannt.

Bezüglich weiteren Standes der Technik wird auf die DE 10 2011 086 741 S1 verwiesen.

Es ist Aufgabe der Erfindung, ein einfach aufbaubares und kompaktes Hybridmodul mit Komponenten zur Drehmomentübergabe an mindestens eine Getriebeeingangswelle anzugeben.

Die Lösung der Aufgabe erfolgt erfindungsgemäß durch die Merkmale des Anspruchs 1. Bevorzugte Ausgestaltungen der Erfindung sind in den Unteransprüchen angegeben, die jeweils einzeln oder in Kombination einen Aspekt der Erfindung darstellen können. Die im weiteren bis zur Figurenbeschreibung genannten Merkmale dienen zur Erläuterung. Es handelt sich nicht um Ausgestaltungen, für die Schutz begehrt wird. Der Schutzumfang wird durch die Ansprüche festgelegt.

Bei dem Hybridmodul für den die elektrische Maschine, den Verbrennungsmotor und das Getriebe aufweisenden Antriebsstrang eines Kraftfahrzeugs ist vorgesehen, dass das Hybridmodul (i) eine erste Einheit mit einem Rotorelement und einer innerhalb des Rotorelements angeordneten Trennkupplung, (ii) eine zweite Einheit mit einer mindestens eine Kupplung umfassenden Kupplungseinrichtung und (iii) eine dritte Einheit mit einem Gehäuseteil aufweist, wobei die erste Einheit und die zweite Einheit miteinander zu einer vormontierten Gesamteinheiten verbunden sind und diese Gesamteinheit in die dritte Einheit hineinragend verbaut und dabei mit der dritten Einheit verbunden ist. Ein derart aufgebautes Hybridmodul kann durch eine besonders einfache Montage erstellt werden und ist dabei sehr kompakt.

Dabei ist insbesondere vorgesehen, dass die dritte Einheit weiterhin auch die elektrischen Maschine oder zumindest einem Stator der elektrischen Maschine aufweist. Daraus resultiert insbesondere, dass bei dem Antriebsstrang die elektrische Maschine zwischen dem Verbrennungsmotor und dem Getriebe angeordnet ist.

Gemäß einer vorteilhaften Ausführungsform ist vorgesehen, dass die Funktion der zweiten Einheit und/oder von zumindest zwei Einheiten der ersten, zweiten und dritten Einheit im Hybridmodul vor der Montage einzeln prüfbar ist. Die entsprechenden Prüfungen können also bereits vor der (End-)Montage erfolgen beziehungsweise abgeschlossen sein.

Gemäß einer weiteren vorteilhaften Ausführungsform ist vorgesehen, dass die Verbindung zwischen erster und zweiter Einheit als Verschraubung und/oder Vernietung und/oder Verschweißung ausgebildet ist.

Die Verbindung zwischen erster und zweiter Einheit ist durch eine Verbindung zwischen dem Rotorelement einerseits und einer Gegenplatte der Kupplungseinrichtung oder mindestens einem mit einer solchen Gegenplatte verbundenen Zwischenelement andererseits realisiert. Dabei stützen sich die Gegenplatte bzw. eine Anpressplatte an dem Zwischenelement und/oder dem Rotorelement in einer Ausführungsvariante axial ab.

Gemäß einer weiteren bevorzugten Ausgestaltung ist die Verbindung der vormontierten Gesamteinheit mit der dritten Einheit durch eine Verschraubung oder eine sonstigen lösbaren Verbindung realisiert.

Gemäß einer weiteren vorteilhaften Ausführungsform ist die Verbindung der vormontierten Gesamteinheit mit der dritten Einheit als eine motorseitig manipulierbare Verbindung ausgebildet.

Gemäß noch einer weiteren vorteilhaften Ausführungsform ist das Rotorelement entweder als Rotor der elektrischen Maschine oder als ein von der elektrischen Maschine antreibbares Rotorelement, insbesondere eine über einen Riementrieb antreibbare Rolle, ausgebildet. Im ersten dieser beiden Fälle weist die dritte Einheit in der Regel den Stator der elektrischen Maschine auf. Im zweiten dieser beiden Fälle ist in der Regel die elektrische Maschine an/in der dritten Einheit angeordnet.

Weiterhin ist mit Vorteil vorgesehen, dass die Lagerung des Rotorelements, der Trennkupplung und der mit dem Rotorelement verbundenen Kupplungseinrichtung gemeinsam über eine Lagereinheit erfolgt.

Gemäß einer vorteilhaften Ausführungsform ist vorgesehen, dass die drehfeste Verbindung zwischen Rotor und Kupplungseinrichtung als eine direkte oder indirekte Verbindung zwischen einem Rotorblech des Rotors und einer Gegenplatte der Kupplungseinrichtung realisiert ist.

Gemäß einer bevorzugten Ausgestaltung ist vorgesehen, dass die zentrale Lagereinheit mittels einer Verschraubung oder einer sonstigen lösbaren Verbindung an der dritten Einheit befestigt wird. Dabei ist insbesondere vorgesehen, dass die lösbare Verbindung eine motorseitig manipulierbare lösbare Verbindung ist.

Gemäß einer weiteren bevorzugten Ausgestaltung weist das Hybridmodul eine motorseitige Zwischenwand auf. Diese Zwischenwand wird bevorzugt teilweise von der ersten Einheit und teilweise von der dritten Einheit gebildet.

Generell kann die Kupplungseinrichtung als Einfach- oder als Mehrfachkupplung ausgebildet sein. Gemäß noch einer weiteren bevorzugten Ausgestaltung ist die Kupplungseinrichtung als Doppelkupplung ausgebildet. Die Vollwelle der Doppelkupplung, d.h. die K1-Getriebeeingangswelle wird in einer von einem Verbrennungsmotor angetriebenen Welle, der Zwischenwelle des Hybridmoduls gelagert. Die Betätigungselemente der Doppelkupplung werden mit den Einrücklagern, die auf der Getriebeseite vormontiert sind, in Kontakt gebracht.

Bei einer bevorzugten Ausgestaltung der Erfindung ist vorgesehen, dass die Trennkupplung als hydraulisch betätigbare Kupplung ausgebildet ist. Dazu ist beispielsweise eine entsprechende Ausrückvorrichtung vorgesehen.

Mit Vorteil weist das Hybridmodul eine als Concentric Slave Cylinder (CSC) ausgeführte Ausrückvorrichtung zur Betätigung der Trennkupplung mittels eines Drucktopfs auf. Die KO-Kupplung kann hydraulisch über ein CSC mit kurzen Kolben betätigt werden. Hierdurch kann mittels eines Kippfreiheitsgrades Schieflagen des Betätigungssystems der K0 ausgeglichen werden.

Die Trennkupplung selbst kann mittels eines Drucktopfes ohne zusätzliche Hebelübersetzung betätigt werden. Aufgrund geringer Hysterese durch die Direktbetätigung ist die Kupplung dann druckregelbar. CSC und Einrücklager sind bevorzugt radial geschachtelt.

Bei einer weiteren bevorzugten Ausgestaltung ist schließlich vorgesehen, dass das Hybridmodul weiterhin ein der Trennkupplung im Antriebsstrang vorgeschaltetes Zweimassenschwungrad aufweist.

Der Versatzausgleich Komplett-Einheit zu Getriebe radial findet über den Reibkontakt der Kupplungsscheiben statt. Axiale Toleranzen können durch Variation der Axialwege im Einrücksystem kompensiert werden.

Unabhängig von der Ausgestaltung der Doppelkupplung kann die K0-Kupplung, d.h. die rotorintegrierte Trennkupplung des Hybridmoduls folgende weitere Merkmale aufweisen:
Es ist vorgesehen, dass axiale und radiale Kräfte von der zentralen Lagereinheit (der Rotorlagerung) aufgenommen werden, diese weist dafür entsprechende Lager auf.

Die Anbindung der ersten Gegenplatte der Doppelkupplung an den Rotor kann über ein dünnes Blech (vorzugsweise am Rotorelement verschweißt oder einstückig durch Umformprozess hergestellt) erfolgen. Das Blech kann an diese erste Gegenplatte direkt verschraubt, vernietet oder verschweißt werden.

Die Anbindung der ersten Gegenplatte an das Rotorelement kann auch durch direkte Verschweißung erfolgen. Bevorzugt ist die Gegenplatte auch gleichzeitig die Gegenplatte der K0 (Doppelfunktion). Dieses spart axialen Bauraum und Teile.

Bei dem Verfahren zur Montage eines Hybridmoduls für einen eine elektrische Maschine, einen Verbrennungsmotor und ein Getriebe aufweisenden Antriebsstrang eines Kraftfahrzeugs ist vorgesehen, dass das Hybridmodul (I) eine erste Einheit mit einem Rotorelement und einer innerhalb des Rotorelements angeordneten Trennkupplung, (ii) eine zweite Einheit mit einer mindestens eine Kupplung umfassenden Kupplungseinrichtung und (iii) eine dritte Einheit mit einem Gehäuseteil aufweist, wobei die erste Einheit und die zweite Einheit zunächst miteinander zu einer vormontierten Gesamteinheit verbunden werden und anschließend diese Gesamteinheit in die dritte Einheit hineinragend verbaut und dabei mit der dritten Einheit verbunden wird. Insbesondere ist weiterhin vorgesehen, dass die dritte Einheit weiterhin auch die elektrische Maschine oder zumindest einem Stator der elektrischen Maschine aufweist.

Gemäß einer vorteilhaften Ausführungsform ist vorgesehen, dass das Hybridmodul anschließend in ein Gehäuseteil des Getriebes eingeführt und dort -insbesondere durch ein Verschrauben der dritten Einheit mit diesem Gehäuseteil- befestigt wird.

Ausführungsformen der Erfindung, auf die diese Erfindung aber nicht beschränkt ist und aus denen sich weitere erfindungsgemäße Merkmale ergeben können, sind in den folgenden Figuren gezeigt.

Es zeigen:
- Fig.1:: ein Hybridmodul gemäß einer ersten Ausführungsform der Erfindung,
- Fig. 2:: eine andere Darstellung des in Fig. 1 gezeigten Hybridmoduls und
- Fig. 3:: ein Hybridmodul gemäß einer zweiten Ausführungsform der Erfindung.

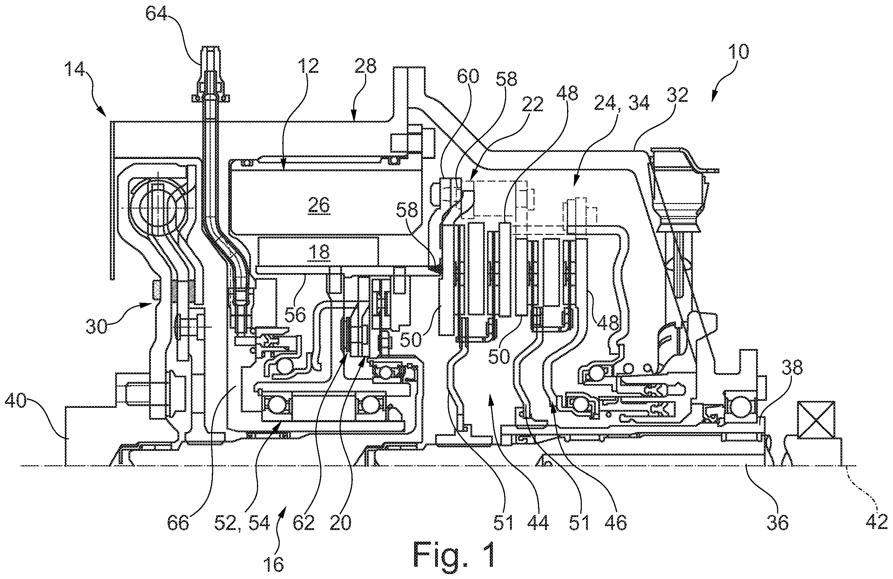

Die Fig. 1 zeigt einen Teil eines Antriebsstranges 10 eines Kraftfahrzeugs in einer Schnittdarstellung. Bei dem Antriebsstrang 10 ist eine elektrische Maschine 12 zwischen einem (nicht gezeigten) Verbrennungsmotor und einem (ebenfalls nicht gezeigten) Getriebe angeordnet. Die elektrische Maschine 12 dient als Antriebsmaschine und ist Teil eines Hybridmoduls 14. Dieses Hybridmodul 14 weist die folgenden Hauptkomponenten auf: (i) eine erste Einheit 16 mit einem als Rotor (Läufer) der elektrischen Maschine 12 ausgebildeten Rotorelement 18, einer innerhalb des Rotorelements 18 angeordneten K0 Trennkupplung 20 und zumindest einer mit dem Rotorelement 18 drehfest verbundenen zweiten Einheit 28 mit einer Kupplungseinrichtung 24, (ii) eine die erste Einheit 16 und einen Stator (Ständer) 26 der elektrischen Maschine 12 teilweise einhausende dritten Einheit (Gehäuseeinheit) 28, (iii) ein der Trennkupplung 20 im Antriebsstrang 10 vorgeschaltetes Zweimassenschwungrad 30, sowie (iv) einem die Kupplungseinrichtung 24 einhausenden Gehäuseteil 32 des Getriebes. Die Kupplungseinrichtung 24 ist als Doppelkupplung 34 ausgebildet. Dementsprechend ist das Getriebe als Doppelkupplungsgetriebe ausgebildet, von dem nur die beiden Getriebeeingangswellen 36, 38 dargestellt sind.

Es ergibt sich folgender Pfad des Antriebsstrangs: Abtriebswelle 40 des Verbrennungsmotors - Zweimassenschwungrad 30 - K0 Trennkupplung 20 - als Rotor Rotorelement 18 - Kupplungseinrichtung 24 - Getriebeeingangswelle 36, 38. Die entsprechenden Wellen 36, 38, 40 liegen dabei auf einer gemeinsamen Achse 42, die die Hauptachse des Hybridmoduls 14 bildet.

Die als Doppelkupplung 34 ausgebildete Kupplungseinrichtung 24 weist zwei Kupplungen 44, 46 mit entsprechenden Anpressplatten 48, Gegenplatten 50, Kupplungsscheiben 51 und Betätigungseinrichtungen auf.

Das als Rotor ausgebildete Rotorelement 18 weist in seinem Inneren eine Rotorlagerung 52 auf, die als zentrale Lagereinheit 54 dient, über die die gesamte erste Einheit 16 in der dritten Einheit 28 drehbar gelagert ist. Die drehfeste Verbindung zwischen Rotorelement 18 und zweiter Einheit 22 ist in diesem Beispiel als eine indirekte Verbindung zwischen einem Rotorblech 56 des Rotors 18 und den Gegenplatten 50 der Kupplungseinrichtung 24 über Zwischenelemente 60 realisiert.

Die Trennkupplung 20 ist als hydraulisch betätigbare Kupplung ausgebildet und wird mittels einer als Concentric Slave Cylinder ausgeführten Ausrückvorrichtung 62 über einen Druckanschluss 64 mittels eines Drucktopfs betätigt.

Motorseitig ist zwischen elektrischer Maschine 12 und Zweimassenschwungrad 30 eine Zwischenwand 66 angeordnet. Diese wird teilweise von der ersten Einheit 16 und teilweise von der dritten Einheit 28 mittels einer Schraubverbindung 68 gebildet.

Es ergeben sich folgende Funktionen:
- Die zweite Einheit 22 mit der Kupplungseinrichtung 24, also insbesondere mit der dargestellten Doppelkupplung 34, wird mit der ersten Einheit 16, die neben dem Rotorelement 18 die Trennkupplung K0 20 und die vom Verbrennungsmotor angetriebene Welle enthält, für den Servicefall trennbar zur einer vormontierten Gesamteinheit 16, 22 verschraubt, vernietet oder verschweißt. Für eine einfache Verbindung kann es vorteilhaft sein, das Rotorelement 18 über ein zusätzliches Blech mit der Kupplungseinrichtung 24 zu verbinden. Bei einem Verschrauben lässt sich direkt trennen, beim Vernieten sind die Niete nur abzubohren und eine Wiedermontage ist unter Verwendung neuer Niete problemlos möglich. Verschweißen geht auch, allerdings ist die Gesamteinheit dann nicht mehr demontierbar ohne zerspanendes Aufstechen. Der Stator 26 der elektrischen Maschine (E-Motor) 12 kann koaxial um den Rotor 18 angeordnet sein. Ein Ersatz an der Montageposition des Rotors 18 könnte alternativ aber auch ein als Riemenscheibe, Kettenritzel, Zahnrad, etc. ausgebildetes Rotorelement sein, über das das Drehmoment einer achsparallel angeordneten elektrischen Maschine 12 in das Getriebe einleitbar ist (Montageschritt MS1).
- Die resultierende Gesamteinheit 16, 22 wird komplett in die vormontierte dritte Einheit 28 montiert und mit dieser vorzugsweise verschraubt (Montageschritt MS2).
- Diese Komplett-Einheit wiederum wird in das Getriebegehäuse montiert. Dabei werden die Kupplungsscheiben 51 auf die Getriebeeingangswelle(n) 36, 38 geschoben, die Vollwelle, in der vom Verbrennungsmotor angetriebenen Welle gelagert, sowie die Betätigungselemente der Doppelkupplung 34 mit den Einrücklagern, die auf der Getriebeseite vormontiert sind, in Kontakt gebracht (Montageschritt MS3).

Weiterhin ergeben sich folgende resultierende Vorteile:
- Eine separate Lagerung der Kupplungseinrichtung 24 (Doppelkupplung 34) im Getriebe ist nicht notwendig, da die Betätigungskräfte durch die Rotorlagerung 52 des Rotors 18 abgestützt werden und so auch die axiale und radiale Lagerung der Kupplungseinrichtung 24 (Doppelkupplung 34) erfolgt.
- Der radiale Versatzausgleich Komplett-Einheit 16, 22, 28 zu Getriebe findet über den Reibkontakt der Kupplungsscheiben 51 statt. Axiale Toleranzen können durch Variation der Axialwege im Einrücksystem kompensiert werden.

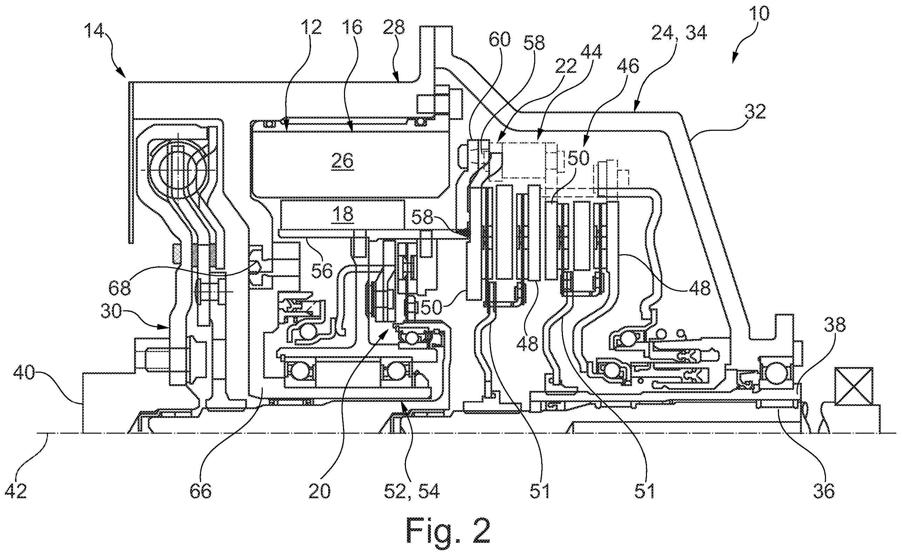

Die Fig. 2 zeigt eine andere (Schnitt-)Darstellung des in Fig. 1 gezeigten Hybridmoduls 14. Bei dieser Darstellung ist erkennbar, dass die motorseitige Zwischenwand 66 teilweise von der ersten Einheit 16 und teilweise von der dritten Einheit 28 durch eine Verschraubung 68 entsprechender Teile gebildet wird.

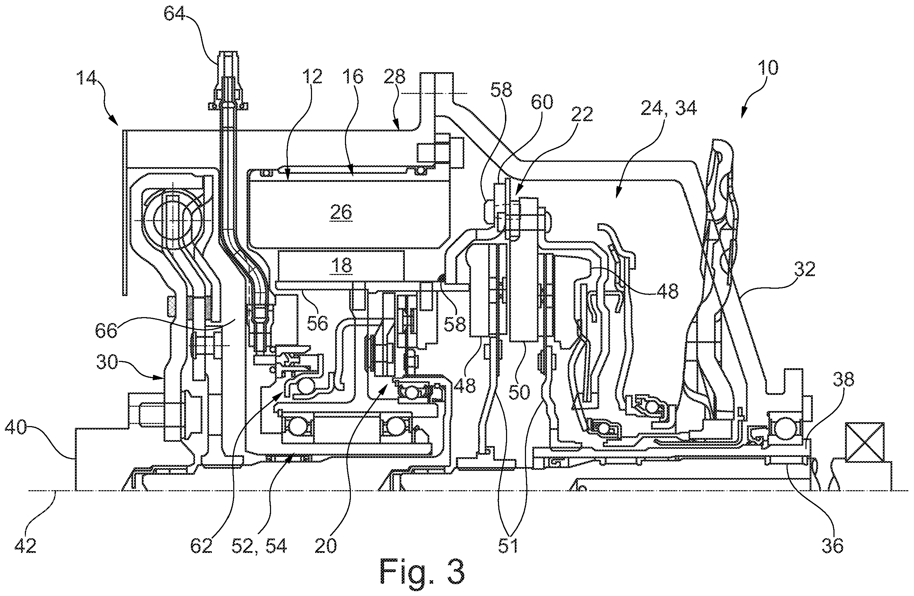

Die Fig. 3 zeigt eine andere Ausführungsform des Hybridmoduls 14. Diese entspricht im Wesentlichen der Ausführungsform des Hybridmoduls 14 aus den Figuren 1 und 2, sodass hier nur auf die Unterschiede eingegangen wird. Bei diesem in Fig. 3 abgebildeten Hybridmodul 14 ist die Doppelkupplung 34 als 3-Platten Doppelkupplung ausgebildet.

Bei der Lagerung der Kupplungseinrichtung 24 im Hybridmodul 14 werden axiale und radiale Kräfte von der Rotorlagerung 52 aufgenommen.

Das Rotorelement 18 bildet den axialen Endanschlag der von einem Zuganker betätigten und mit Blattfedern im geöffneten Zustand der Kupplungseinrichtung 24 beabstandeten Anpressplatte 48.

Die Anbindung der als Gegenplatte 50 fungierenden Zentralplatte an den Rotor 18 erfolgt über ein dünnes Blech (vorzugsweise am Rotorelement 18 verschweißt oder einstückig durch Umformprozess hergestellt), wobei das Blech an der Zentralplatte direkt oder über ein Blech-Zwischenteil verschraubt, vernietet (oder verschweißt, dann nicht demontierbar) wird.

Die Montage der Gesamteinheit 18, 22, 28 und des Getriebes wird auch hier durch (i) ein Befestigen des Rotorelements 18 (der ersten Einheit 16) an der Kupplungseinrichtung 24 (der zweiten Einheit 22), (ii) ein Einführen der derart erzielten vormontierten Gesamteinheit 16, 22 in die vorab montierte dritte Einheit 28, die die elektrische Maschine 12 unterbringt, und Befestigen der vormontierten Gesamteinheit 16, 22 an der dritten Einheit 28 und durch (iii) Einführen einer derart erzielten Gesamteinheit in ein Gehäuse des Getriebes durchgeführt.

### Bezugszeichenliste

- 10: Antriebsstrang
- 12: Maschine, elektrisch
- 14: Hybridmodul
- 16: Einheit, erste
- 18: Rotorelement
- 20: Trennkupplung, K0
- 22: Einheit, zweite
- 24: Kupplungseinrichtung
- 26: Stator, elektr. Maschine
- 28: Einheit, dritte
- 30: Zweimassenschwungrad
- 32: Gehäuseteil (Getriebe)
- 34: Doppelkupplung
- 36: Getriebeeingangswelle, erste
- 38: Getriebeeingangswelle, zweite
- 40: Abtriebswelle
- 42: Achse
- 44: Kupplung, erste
- 46: Kupplung, zweite
- 48: Anpressplatte
- 50: Gegenplatte
- 51: Kupplungsscheibe
- 52: Rotorlagerung
- 54: Lagereinheit, zentral (Moduleinheit)
- 56: Rotorblech
- 58: Verbindung
- 60: Zwischenelement
- 62: Ausrückvorrichtung
- 64: Druckanschluss
- 66: Zwischenwand
- 68: Verschraubung

## Patentansprüche

1. Hybridmodul (14) für einen eine elektrische Maschine, einen Verbrennungsmotor und ein Getriebe aufweisenden Antriebsstrang (10) eines Kraftfahrzeugs, wobei das Hybridmodul (14) aufweist:
eine erste Einheit (16) mit einem Rotorelement (18, 56) und einer innerhalb des Rotorelements (18) angeordneten Trennkupplung (20);
eine zweite Einheit (22) mit einer mindestens eine Kupplung (44, 46) umfassenden Kupplungseinrichtung (24); und
eine dritte Einheit (28) mit einem Gehäuseteil, wobei
die erste Einheit (16) und die zweite Einheit (22) miteinander zu einer vormontierten Gesamteinheit verbunden sind und diese Gesamteinheit in die dritte Einheit (28) hineinragend verbaut und dabei mit der dritten Einheit (28) verbunden ist, **dadurch gekennzeichnet, dass**
die Verbindung zwischen der ersten Einheit (16) und der zweiten Einheit (22) durch eine Verbindung zwischen dem Rotorelement (18) einerseits und einer Gegenplatte (50) der Kupplungseinrichtung (24) oder mindestens einem mit einer solchen Gegenplatte (50) verbundenen Zwischenelement (60) andererseits realisiert ist.

2. Hybridmodul nach Anspruch 1, **dadurch gekennzeichnet, dass** die Funktion der zweiten Einheit oder von zumindest zwei Einheiten der ersten, zweiten und dritten Einheit im Hybridmodul (14) vor der Montage einzeln prüfbar ist.

3. Hybridmodul nach Anspruch 1 oder 2, **dadurch gekennzeichnet, dass** die Verbindung zwischen der ersten Einheit (16) und der zweiten Einheit (22) als Verschraubung, Vernietung oder Verschweißung ausgebildet ist.

4. Hybridmodul nach einem der Ansprüche 1 bis 3, **dadurch gekennzeichnet, dass** die Verbindung der vormontierten Gesamteinheit mit der dritten Einheit (28) durch eine Verschraubung (68) oder eine sonstige lösbare Verbindung (68) realisiert ist.

5. Hybridmodul nach einem der Ansprüche 1 bis 4, **dadurch gekennzeichnet, dass** das Rotorelement (18) als Rotor der elektrischen Maschine (12) oder als ein von der elektrischen Maschine (12) antreibbares Rotorelement ausgebildet ist.

6. Hybridmodul nach einem der Ansprüche 1 bis 5, **dadurch gekennzeichnet, dass** die Lagerung des Rotorelements (18), der Trennkupplung (20) und der mit dem Rotorelement (18) verbundenen Kupplungseinrichtung (24) gemeinsam über eine Lagereinheit (54) erfolgt.

## Claims

1. A hybrid module (14) for a drive train (10) of a motor vehicle having an electric machine, an internal combustion engine and a transmission, wherein the hybrid module (14) has:
a first unit (16) with a rotor element (18, 56) and a disconnect clutch (20) arranged within the rotor element (18);
a second unit (22) having a clutch device (24) comprising at least one clutch (44, 46); and
a third unit (28) having a housing part, wherein
the first unit (16) and the second unit (22) are connected to one another to form a pre-assembled overall unit and this overall unit is installed protruding into the third unit (28) and is thus connected to the third unit (28),
**characterised in that**
the connection between the first unit (16) and the second unit (22) is implemented by a connection between the rotor element (18) on the one hand and a counter plate (50) of the clutch device (24) or at least an intermediate element (60) connected to such a counter plate (50) on the other hand.

2. The hybrid module according to claim 1, **characterised in that** the function of the second unit or of at least two units of the first, second and third units in the hybrid module (14) can be individually checked before assembly.

3. The hybrid module according to claim 1 or 2, **characterised in that** the connection between the first unit (16) and the second unit (22) is designed as a screw connection, rivet connection or welded connection.

4. The hybrid module according to one of claims 1 to 3, **characterised in that** the connection of the pre-assembled overall unit to the third unit (28) is implemented by a screw connection (68) or some other detachable connection (68).

5. The hybrid module according to one of claims 1 to 4, **characterised in that** the rotor element (18) is designed as a rotor of the electric machine (12) or as a rotor element that can be driven by the electric machine (12).

6. The hybrid module according to one of claims 1 to 5, **characterised in that** the rotor element (18), the disconnect clutch (20) and the clutch device (24) connected to the rotor element (18) are mounted jointly via a bearing unit (54).

## Revendications

1. Module hybride (14) pour un groupe motopropulseur (10) d'un véhicule automobile, qui comporte une machine électrique, un moteur à combustion interne et une boîte de vitesse, le module hybride (14) comportant :
une première unité (16) avec un élément de rotor (18, 56) et un embrayage de séparation (20) disposé à l'intérieur de l'élément de rotor (18) ;
une deuxième unité (22) avec un dispositif d'embrayage (24) comprenant au moins un embrayage (44, 46) ; et
une troisième unité (28) ayant une partie de boîtier, dans lequel
la première unité (16) et la deuxième unité (22) sont reliées l'une à l'autre pour former une unité globale pré-montée et cette unité globale est intégrée dans la troisième unité (28) et est reliée à la troisième unité (28),
**caractérisé en ce que**
la liaison entre la première unité (16) et la deuxième unité (22) est réalisée par une liaison entre l'élément de rotor (18) d'une part et une contre-plaque (50) du dispositif d'embrayage (24) ou au moins un élément intermédiaire (60) relié à une telle contre-plaque (50) d'autre part.

2. Module hybride selon la revendication 1, **caractérisé en ce que** la fonction de la deuxième unité ou d'au moins deux unités parmi la première, la deuxième et la troisième unités dans le module hybride (14) peut être vérifiée individuellement avant montage.

3. Module hybride selon la revendication 1 ou 2, **caractérisé en ce que** la liaison entre la première unité (16) et la deuxième unité (22) est réalisée par vissage, rivetage ou soudage.

4. Module hybride selon l'une quelconque des revendications 1 à 3, **caractérisé en ce que** la liaison de l'unité globale pré-montée à la troisième unité (28) est réalisée par vissage (68) ou par une autre liaison libérable (68).

5. Module hybride selon l'une quelconque des revendications 1 à 4, **caractérisé en ce que** l'élément de rotor (18) est réalisé comme rotor de la machine électrique (12) ou comme élément de rotor pouvant être entraîné par la machine électrique (12).

6. Module hybride selon l'une quelconque des revendications 1 à 5, **caractérisé en ce que** le logement de l'élément de rotor (18), de l'embrayage de séparation (20) et du dispositif d'embrayage (24) relié à l'élément de rotor (18) est effectué conjointement par l'intermédiaire d'une unité de palier (54).
